# EUROPEAN PATENT SPECIFICATION

(11) **EP 4 023 414 B1**
(45) Date of publication and mention of the grant of the patent: **04.10.2023**
(21) Application number: 21214485.1
(22) Date of filing: 14.12.2021
(51) Int. Cl.: B29C 48/00, B29C 31/06, B29C 31/10, B29C 48/16, B29C 48/285, B29C 48/80, B29C 48/395, B29C 48/92

(54) **PRODUCING A PLASTIC PRODUCT**
HERSTELLUNG EINES KUNSTSTOFFPRODUKTS
PRODUCTION D'UN PRODUIT EN MATIÈRE PLASTIQUE

(30) Priority: 29.12.2020 BE 202005990
(43) Date of publication of application: 06.07.2022
(73) Proprietor: Ecoo B.V., 3530 Houthalen (BE)
(72) Inventor: VERHAERT, Koen, 2400 Postel (BE)
(74) Representative: Arnold & Siedsma

(56) References cited:
- EP-A1- 3 141 371
- WO-A1-2014/072674
- DE-A1-102016 003 765
- JP-A- S62 246 711
- JP-A- 2003 291 200

## Description

The invention relates to a device and a method for manufacturing a product from plastic.

Plastic products are typically manufactured by filling a mould with hot plastic under pressure. The hot plastic has a predetermined flow and fills the mould as a result of the pressure. In co-injection moulding or co-extrusion different plastics with different properties are introduced into one mould together in a predetermined manner. The prior art documents WO 2014/072674 A1, JP S62 246711 A, JP 2003 291200 A, DE 10 2016 003765 and EP 3 141 371 A1 disclose known methods and devices for feeding granulate materials.

A product which is composed of two different plastics in a predetermined manner can hereby be obtained.

It is an object of the invention to improve this process and to make it more widely usable.

For this purpose the invention provides a device for manufacturing a product from plastic, wherein the device comprises a mould which is coupled to a screw pump, wherein the screw pump is configured to fill the mould with plastic, wherein the screw pump is coupled to a first granulate storage via a feed system for controlling the feed of first granulate from the first granulate storage to the screw pump, wherein the screw pump is coupled to a second granulate storage via the feed system, wherein the feed system is further provided to control the feed of second granulate from the second granulate storage to the screw pump at a predetermined ratio to the first granulate, wherein the predetermined ratio is defined between a minimum ratio and a maximum ratio by an operator on the basis of product properties and wherein the feed system is configured to set an effective ratio between the minimum ratio and the maximum ratio on the basis of a quantity of second granulate in the second granulate storage.

The invention is based on the insight that not all raw materials are available to the same extent in recycling. When a product is manufactured from two different raw materials, in one extreme situation production must be shut down when one of the two raw materials is no longer available. In another extreme situation, particularly when one of the two raw materials comes from a recycling process, a surplus builds up and the recycling process must be halted in order to process the surplus. Both situations are far from ideal. It is additionally typically desired, particularly when different granulates are used as starting material in order to form a final product, to accurately check the quantity of each starting material. This is done in order to combine the desired properties of each starting material so as to control or set the final properties of the final product. Quantities of each starting material are here typically controlled such that one or more predetermined final properties of the final product are achieved and set. An accurate check of the final product is performed in order to reduce and/or prevent adverse effects, examples of adverse effects being the phase separation between the different materials of the granulate, which may change the mechanical properties of the final product, and the undesired shrinkage phenomenon during the manufacturing process wherein use is made of a mould.

The invention is further based on the insight that a minimum ratio and a maximum ratio between the quantities of the different granulates can be determined for a product. This enables the fluctuation inherent to recycling to be accommodated at least partially by also varying the use of the raw materials on the basis of availability. This improves the manufacture of products from recycling and makes it more widely usable.

The minimum ratio and the maximum ratio preferably lie at least 5%, more preferably at least 10%, most preferably at least 15% apart. Having the minimum ratio and the maximum ratio sufficiently far apart makes it possible to increase the influence of the relative use of the first granulate relative to the second granulate. The above-stated effect can hereby be maximized.

The first granulate preferably has a first melting temperature T1 and the second granulate a second melting temperature T2, wherein T2 is greater than T1, preferably with a difference of a minimum of 40°C. The first granulate preferably comprises a first material, wherein the second granulate comprises a second material and wherein the first material has a first density n1 and the second material has a second density n2, wherein n2 is greater than n1. The first material preferably has a first expansion coefficient u1 and the second material a second expansion coefficient u2, wherein u2 is smaller than u1. By selecting granulates and materials with different properties including melting temperature, density and expansion coefficient, product properties of the final product can be strongly influenced by selecting the ratio. Tests have shown that adding a second granulate with a material having a higher melting temperature and/or a greater density and/or a smaller expansion coefficient has a surprising effect. The second granulate will not melt fully in the screw pump and will therefore end up in the final end product as granules or flakes. These granules or flakes are surrounded by the plastic of the first granulate, which typically does melt completely. The granules or flakes hereby function as fibres which strengthen the plastic of the first granulate. The granules or flakes impart a great hardness to the final product, and reduce shrinkage.

The second granulate storage preferably comprises a sensor for measuring the quantity of granulate in the second granulate storage, which sensor is operatively coupled to the feed system. A lower threshold value of the quantity of granulate in the second granulate storage can preferably be set, which lower threshold value triggers the feed system to use a minimum of second granulate within the minimum ratio and the maximum ratio. An upper threshold value of the quantity of granulate in the second granulate storage can preferably be set, which upper threshold value triggers the feed system to use a maximum of second granulate within the minimum ratio and the maximum ratio. Changing a ratio of raw materials on the basis of the supply of raw materials during production of plastic products makes it possible to accommodate a variation in availability of the raw materials. The invention is hereby highly suitable for production of plastic products with granulate from recycling. This is because it is not possible to predict with certainty the proportion of the different plastics in waste relative to each other. In practice, the ratio of the different plastics in waste fluctuates. This fluctuation can be partially accommodated with storage tanks. The fluctuation can be accommodated further by also varying the ratio during production.

The product properties preferably comprise one or more of shrinkage during cooling, hardness, stiffness, deformation during cooling, and elasticity. By keeping these product properties within minimum and maximum predetermined limits it is possible to vary raw materials without adverse effects for the end customer of the product.

The screw pump is preferably further coupled to a third granulate storage via the feed system, wherein the feed system is provided to control the feed of third granulate from the third granulate storage to the screw pump at a fixed ratio to the first granulate, which fixed ratio is determined by an operator on the basis of product properties. The third granulate is preferably different from the first granulate and the second granulate, and allows the product properties to be influenced further. The third granulate is preferably selected to increase an elasticity of the final product.

The mould is preferably chosen from an injection mould and an extrusion die.

The invention further relates to a method for manufacturing a product from plastic, wherein the method comprises of:
- filling a mould with a screw pump in order to form the product;
- feeding first granulate from a first granulate storage to the screw pump via a feed system;
- feeding second granulate from a second granulate storage to the screw pump via the feed system;
wherein the feed system is provided to control the feed of the first granulate and the second granulate at a predetermined ratio which is defined between a minimum ratio and a maximum ratio by an operator on the basis of product properties and wherein the method further comprises of:
- setting by the feed system of an effective ratio between the minimum ratio and the maximum ratio on the basis of a quantity of second granulate in the second granulate storage.

The advantages and effects of the above described device apply analogously to the method of the invention.

The method preferably further comprises of measuring a quantity of granulate in the second granulate storage via a sensor and of outputting a result of the measurement to the feed system.

The invention will now be further described on the basis of an exemplary embodiment shown in the drawing.

In the drawing:

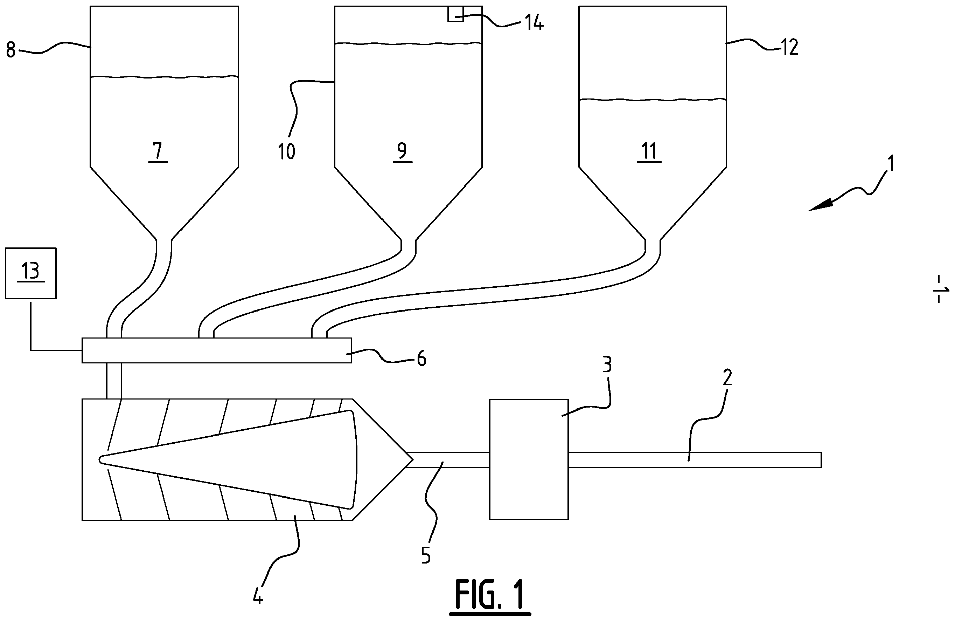

figure 1 shows a device according to an embodiment of the invention.

The same or similar elements are designated in the drawing with the same reference numerals.

The device and method according to the invention have for their object to manufacture a product from plastic. This product of plastic is manufactured using recycled plastics. A recycled plastic is a plastic produced by a recycling process. Recycled plastics are typically less pure than new plastics. During the recycling process a plastic product is typically shredded and washed. The object is to manufacture granules, also referred to as granulates. These granulates can be manufactured directly from the shredded and washed plastic product, or indirectly, for instance after melting of the shredded and washed plastic product. In the invention a first and second granulate are used to manufacture a product.

In an embodiment the first and second granulates are a deformable thermoplastic material, such as a thermoplastic material comprising polymer.

In an embodiment the first granulate comprises a first material and the second granulate comprises a second material, wherein these materials differ from each other. These first and second materials therefore have different properties such as flexibility, stiffness, brittleness, and such as also a cracking resistance and a shrinkage resistance. The shrinkage resistance is linked to the expansion coefficient of the material, particularly in that a material with a greater expansion coefficient is also more susceptible to shrinkage.

In an embodiment the first material has a first density n1 and the second material a second density n2.

Furthermore, when the third granulate is used, the third granulate comprises a third material with a third density n3, wherein n3 is smaller than n1. Using the third granulate, the operator has more options for imparting a desired property to the final product.

In an embodiment the first material has a first expansion coefficient u1 and the second material has a second expansion coefficient u2, wherein u2 is smaller than u1, preferably smaller than 0.2 mm/m°C, as measured according to the DIN 53752 standard.

The mutual ratio of the expansion coefficient and the combination of materials in a determined ratio imparts a favourable effect to the final product. By controlling the ratio on the basis of the availability of the first and second material the device can keep the favourable effect within a desired acceptable range.

A greater quantity of first material provides for more flexibility in the final product, a lower melting temperature, but also results in shrinkage during an extrusion process. By adding second material hereto this shrinkage phenomenon is lessened.

Examples of first material are: high-density polyethylene (HDPE) and high-density polypropylene (HDPP). Such material is flexible and shrinks when cooling. Typical properties are: melting temperature Ts between: 80-100-120-130°C, density n between: 0.8-1-1.5 g/cm, expansion coefficient u: 0.20 mm/ m°C, preferably smaller than 0.2 mm/ m°C as measured according to the DIN 53752 standard and crystallinity lower than 40%.

Examples of second material are: polyvinyl chloride (PVC), polyethylene terephthalate (PET), polystyrene (PS). Such material has a great hardness, shrinks less and may be brittle. Typical properties are: melting temperature Ts between: 180-255 °C, density n greater than n1, expansion coefficient u: smaller than u1, and crystallinity: lower than 40%.

Examples of third material are: linear low-density polyethylene (LLDPE), low-density polyethylene (LDPE) and/or low-density polypropylene (LDPP). Typical properties are: melting temperature Ts between: 185-255 °C, expansion coefficient u: 0.25 (expands more) and crystallinity: 40-70%.

In an embodiment the feed system is further configured to add one or more additives, examples of suitable additives being filler materials, auxiliary processing agents, impact modifiers, nitrile rubbers, pigments, dyes and flame retardants. Additionally, it is also possible to add in the first, second and optionally the third material, in pure form or purer form as compared to the recycled material, instead of these additives or in addition to these additives. This in order to enhance the properties of the synthetic material, wherein the addition of the additives preferably serves as a reprocessing step.

Figure 1 shows an embodiment of a device 1 which is provided to manufacture a product 2 from plastic. In the shown embodiment the plastic product 2 is an extruded product. For this purpose a mould 3 adapted to extrude plastic is provided in the shown device 1. The principle of plastic extrusion is known and is therefore not further elucidated in this description. Other embodiments can be provided wherein the same device 1 is provided with a mould for injection moulding of products. The principle of plastic injection moulding is also known and is therefore not further elucidated in this description.

The mould 3 is fed with plastic under pressure, designated with reference numeral 5. This plastic typically has a predetermined temperature and a predetermined pressure. The plastic 5 fed to mould 3 is typically at least partially melted, making the plastic mouldable. This plastic 5 is introduced into a screw pump 4 at the predetermined pressure and the predetermined temperature. When an extrusion die 3 is coupled to screw pump 4, the screw pump was also referred to as extruder. When an injection mould is coupled to screw pump 4, the screw pump is referred to as screw feeder.

The screw pump is fed at its inlet with plastic granules, also referred to as granulate. Rotation of the screw pump builds up pressure and simultaneously also builds up temperature. The build-up of the pressure and the temperature will cause the granulate to melt and flow at least partially. The plastic 5 is supplied to mould 3 in this state. This principle is generally known in the production of plastic products and will therefore not be further elucidated in this description.

The device according to the invention comprises a first granulate storage tank 8 comprising a first granulate 7. The device further comprises a second granulate storage tank 10 comprising a second granulate 9. The device preferably further comprises a third granulate storage tank 12 comprising a third granulate 11. The granulates 7, 9 and 11 are preferably as described at length above.

Provided between screw pump 4 and each granulate storage tank 8, 10, 12 is a feed system 6. The feed system 6 is configured to supply a predetermined quantity or a predetermined flow rate of granulate from the relevant granulate storage tank 8, 10, 12 to the screw pump 4. The feed system 6 is shown in figure 1 as one block. A separate feed system can in practice however be provided from each granulate storage tank 8, 10, 12 to the screw pump 4. Each feed system can here carry the granulate in question to one opening of screw pump 4, or each feed system can be connected to screw pump 4 with its own opening (not shown). Whether feed system 6 is provided as one block or as separate feed systems for each granulate storage tank 8, 10, 12, a controller 13 is in each case provided in order to control the quantity and especially the ratios.

Ratios is understood to mean that the volume and/or weight ratio between first granulate 7 and second granulate 9 being carried to screw pump 4 is controlled to have a predetermined ratio. This predetermined ratio lies between a minimum ratio and a maximum ratio, both of these being dependent on the product. This is based on the insight that the second granulate is cheaper than the first granulate. The proportion of second granulate should therefore in principle always be maximized. The availability of the second granulate is however not constant. When there is no more second granulate, when second granulate storage tank 10 is empty, no more products can be manufactured because a minimum of second granulate is needed in the product 2.

An operator predetermines the maximum ratio and the minimum ratio for each type and kind of product 2. This means that the maximum amount of second granulate 9 that may be incorporated therein relative to the first granulate 7, this being the maximum ratio, is determined for each product. Minimum ratio means that the minimum amount of second granulate 9 that must be incorporated therein relative to the first granulate 7 is determined for each product. These minimum and maximum ratios are determined on the basis of predetermined product properties. In other words, the maximum ratio and the minimum ratio at which the product properties lie outside predetermined specifications are established.

The device 1, particularly the controller 13, is primarily configured to use a maximum quantity of second granulate 9 relative to first granulate 7. In other words, the controller 13 is configured to have feed system 6 transport first granulate 7 and second granulate 9 to screw pump 4 in accordance with the maximum ratio. However, when the quantity of second granulate 9 decreases and hereby for instance drops below a predetermined threshold, controller 13 will control feed system 6 to have first granulate 7 and second granulate 9 transported to screw pump 4 in accordance with the minimum ratio. It is possible to realize more complex control settings wherein, in addition to a minimum ratio and maximum ratio, an optimal ratio at which the product properties are optimal is further also determined. In such a situation the controller will select the optimal ratio and switch to the maximum ratio when the quantity of second granulate 9 exceeds an upper predetermined threshold and switch to the minimum ratio when the quantity of second granulate 9 drops below a lower predetermined threshold.

In order to measure the predetermined threshold a sensor 14 is preferably provided in the second granulate storage tank 10. The sensor 14 can measure the quantity of granulate in the tank in different ways. An example is a pressure sensor at the bottom of the tank. Another example is an optical sensor at the top of the tank, which measures the height of the granulate in the tank.

Further sensors (not shown) can optionally be provided in the first granulate storage tank 8 and the third granulate storage tank 12.

It is further possible to determine for each product 2 whether and how much third granulate 11 is carried along to screw pump 4. This can also be controlled by controller 13. The third granulate is preferably added at a substantially fixed ratio relative to the first granulate.

The method for manufacturing a product provides on one hand for control and operation of the elements and components of the device. On the other hand, the method provides for determination and selection of the ratios of the granulates 7, 9, 11 relative to each other for manufacturing a product 2 with product properties that meet predetermined specifications. The skilled person will appreciate on the basis of the above explanation that the features and properties of the method correspond to and are analogous to the features and properties of the device.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. Device for manufacturing a product from plastic, wherein the device comprises a mould which is coupled to a screw pump, wherein the screw pump is configured to fill the mould with plastic, wherein the screw pump is coupled to a first granulate storage via a feed system for controlling the feed of first granulate from the first granulate storage to the screw pump, wherein the screw pump is coupled to a second granulate storage via the feed system, wherein the feed system is further provided to control the feed of second granulate from the second granulate storage to the screw pump at a predetermined ratio to the first granulate, wherein the predetermined ratio is defined between a minimum ratio and a maximum ratio by an operator on the basis of product properties,
**characterised in that** the feed system is configured to set an effective ratio between the minimum ratio and the maximum ratio on the basis of a quantity of second granulate in the second granulate storage.

2. Device according to any one of the foregoing claims, wherein the minimum ratio and the maximum ratio lie at least 5%, preferably at least 10%, more preferably at least 15% apart.

3. Device according to any one of the foregoing claims, wherein the first granulate has a first melting temperature T1 and the second granulate has a second melting temperature T2, wherein T2 is greater than T1, preferably with a difference of a minimum of 40°C.

4. Device according to any one of the foregoing claims, wherein the first granulate comprises a first material and wherein the second granulate comprises a second material, and wherein the first material has a first density n1 and the second material has a second density n2, wherein n2 is greater than n1.

5. Device according to any one of the foregoing claims, wherein the first material has a first expansion coefficient u1 and the second material has a second expansion coefficient u2, wherein u2 is smaller than u1.

6. Device according to any one of the foregoing claims, wherein the second granulate storage comprises a sensor for measuring the quantity of granulate in the second granulate storage, which sensor is operatively coupled to the feed system.

7. Device according to the foregoing claim, wherein a lower threshold value of the quantity of granulate in the second granulate storage can be set, which lower threshold value triggers the feed system to use a minimum of second granulate within the minimum ratio and the maximum ratio.

8. Device according to claim 3 or 4, wherein an upper threshold value of the quantity of granulate in the second granulate storage can be set, which upper threshold value triggers the feed system to use a maximum of second granulate within the minimum ratio and the maximum ratio.

9. Device according to any one of the foregoing claims, wherein the product properties comprise one or more of shrinkage during cooling, hardness, stiffness, deformation during cooling, and elasticity.

10. Device according to any one of the foregoing claims, wherein the screw pump is further coupled to a third granulate storage via the feed system, wherein the feed system is provided to control the feed of third granulate from the third granulate storage to the screw pump at a fixed ratio to the first granulate, which fixed ratio is determined by an operator on the basis of product properties.

11. Device according to any one of the foregoing claims, wherein the mould is chosen from an injection mould and an extrusion die.

12. Method for manufacturing a product from plastic, wherein the method comprises of:
- filling a mould with a screw pump in order to form the product;
- feeding first granulate from a first granulate storage to the screw pump via a feed system;
- feeding second granulate from a second granulate storage to the screw pump via the feed system;
wherein the feed system is provided to control the feed of the first granulate and the second granulate at a predetermined ratio which is defined between a minimum ratio and a maximum ratio by an operator on the basis of product properties, **characterised in that** the method further comprises of:
- setting by the feed system of an effective ratio between the minimum ratio and the maximum ratio on the basis of a quantity of second granulate in the second granulate storage.

13. Method according to the foregoing claim, wherein the method further comprises of measuring a quantity of granulate in the second granulate storage via a sensor and of outputting a result of the measurement to the feed system.

## Patentansprüche

1. Vorrichtung zur Herstellung eines Produkts aus Kunststoff, wobei die Vorrichtung eine Form umfasst, die mit einer Schraubenpumpe gekoppelt ist, wobei die Schraubenpumpe so ausgebildet ist, dass sie die Form mit Kunststoff füllt, wobei die Schraubenpumpe über ein Zuführsystem mit einem ersten Granulatspeicher gekoppelt ist, um die Zufuhr von erstem Granulat aus dem ersten Granulatspeicher zur Schraubenpumpe zu steuern, wobei die Schraubenpumpe über das Zuführsystem mit einem zweiten Granulatspeicher gekoppelt ist, wobei das Zuführsystem ferner vorgesehen ist, um die Zufuhr von zweitem Granulat aus dem zweiten Granulatspeicher zu der Schraubenpumpe in einem vorbestimmten Verhältnis zu dem ersten Granulat zu steuern, wobei das vorbestimmte Verhältnis auf der Grundlage von Produkteigenschaften zwischen einem Minimal-Verhältnis und einem Maximal-Verhältnis von einem Bediener definiert wird,
**dadurch gekennzeichnet, dass**
das Zuführsystem ausgebildet ist, um auf der Basis einer Menge an zweitem Granulat in dem zweiten Granulatspeicher ein Effektiv-Verhältnis zwischen dem Minimal-Verhältnis und dem Maximal- Verhältnis einzustellen.

2. Vorrichtung nach einem der vorherigen Ansprüche, wobei das Minimal-Verhältnis und das Maximal-Verhältnis mindestens 5 %, vorzugsweise mindestens 10 %, besonders bevorzugt mindestens 15 %, auseinander liegen.

3. Vorrichtung nach einem der vorherigen Ansprüche, wobei das erste Granulat eine erste Schmelztemperatur T1 und das zweite Granulat eine zweite Schmelztemperatur T2 aufweist, wobei T2 größer als T1 ist, vorzugsweise mit einer Differenz von mindestens 40°C.

4. Vorrichtung nach einem der vorherigen Ansprüche, wobei das erste Granulat ein erstes Material umfasst und wobei das zweite Granulat ein zweites Material umfasst, und wobei das erste Material eine erste Dichte n1 und das zweite Material eine zweite Dichte n2 aufweist, wobei n2 größer als n1 ist.

5. Vorrichtung nach einem der vorherigen Ansprüche, wobei das erste Material einen ersten Ausdehnungskoeffizienten u1 und das zweite Material einen zweiten Ausdehnungskoeffizienten u2 aufweist, wobei u2 kleiner als u1 ist.

6. Vorrichtung nach einem der vorherigen Ansprüche, wobei der zweite Granulatspeicher zur Messung der Granulatmenge im zweiten Granulatspeicher einen Sensor aufweist, welcher mit dem Zuführsystem betriebsmäßig gekoppelt ist.

7. Vorrichtung nach dem vorherigen Anspruch, wobei hinsichtlich der Menge des Granulats im zweiten Granulatspeicher ein unterer Schwellenwert einstellbar ist, welcher das Zuführsystem veranlasst, innerhalb des Minimal-Verhältnisses und des Maximal-Verhältnisses ein Minimum an zweitem Granulat zu verwenden.

8. Vorrichtung nach Anspruch 3 oder 4, wobei hinsichtlich der Menge des Granulats der Granulatmenge im zweiten Granulatspeicher ein oberer Schwellenwert einstellbar ist, welcher das Zuführsystem veranlasst, innerhalb des Minimal-Verhältnisses und des Maximal-Verhältnisses ein Maximum an zweitem Granulat zu verwenden.

9. Vorrichtung nach einem der vorherigen Ansprüche, wobei die Produkteigenschaften eine oder mehrere der folgenden Eigenschaften umfassen: Schrumpfung beim Abkühlen, Härte, Steifigkeit, Verformung beim Abkühlen sowie Elastizität.

10. Vorrichtung nach einem der vorherigen Ansprüche, wobei die Schraubenpumpe über das Zuführsystem ferner mit einem dritten Granulatspeicher gekoppelt ist, wobei das Zuführsystem vorgesehen ist, um die Zuführung des dritten Granulats aus dem dritten Granulatspeicher zur Schraubenpumpe in einem festen Verhältnis zum ersten Granulat zu steuern, wobei das feste Verhältnis auf der Grundlage von Produkteigenschaften von einem Bediener bestimmt wird.

11. Vorrichtung nach einem der vorherigen Ansprüche, wobei die Form eine Spritzgussform oder eine Extrusionsmatrize darstellt.

12. Verfahren zur Herstellung eines Produkts aus Kunststoff, wobei das Verfahren aufweist:
- Befüllen einer Form mittels einer Schraubenpumpe, um das Produkt zu formen;
- Zuführen eines ersten Granulates aus einem ersten Granulatspeicher zu der Schraubenpumpe über ein Zuführsystem;
- Zuführen eines zweiten Granulates aus einem zweiten Granulatspeicher zu der Schraubenpumpe über das Zuführsystem;
wobei das Zuführsystem vorgesehen ist, um die Zufuhr des ersten Granulates und des zweiten Granulates in einem vorbestimmten Verhältnis zu steuern, welches auf der Grundlage von Produkteigenschaften zwischen einem Minimal-Verhältnis und einem Maximal-Verhältnis von einem Bediener definiert wird, **dadurch gekennzeichnet, dass** das Verfahren ferner aufweist:
- Einstellen eines Effektiv-Verhältnisses zwischen dem Minimal-Verhältnis und dem Maximal- Verhältnis durch das Zuführsystem auf der Grundlage einer Menge an zweitem Granulat in dem zweiten Granulatspeicher.

13. Verfahren nach dem vorherigen Anspruch, wobei das Verfahren ferner das Messen einer Granulatmenge in dem zweiten Granulatspeicher über einen Sensor und das Ausgeben eines Ergebnisses der Messung an das Zuführsystem umfasst.

## Revendications

1. Dispositif de fabrication d'un produit à partir du plastique, dans lequel le dispositif comprend un moule qui est couplé à une pompe à vis, dans lequel la pompe à vis est configurée pour remplir le moule avec du plastique, dans lequel la pompe à vis est couplée à une première unité de stockage de granulé via un système de fourniture pour commander la fourniture de premier granulé à partir de l'unité de stockage de granulé à la pompe à vis, dans lequel la pompe à vis est couplée à une deuxième unité de stockage de granulé via le système de fourniture, dans lequel le système de fourniture est en outre prévu pour commander la fourniture de deuxième granulé à partir de la deuxième unité de stockage de granulé à la pompe à vis à un taux prédéterminé par taux au premier granulé, dans lequel le taux prédéterminé est défini entre un taux minimal et un taux maximal par un opérateur sur la base des propriétés de produit,
**caractérisé en ce que** le système de fourniture est configuré pour établir un taux effectif entre le taux minimal et le taux maximal sur la base d'une quantité de deuxième granulé dans la deuxième unité de stockage de granulé.

2. Dispositif selon l'une quelconque des revendications précédentes, dans lequel le taux minimal et le taux maximal sont séparés d'un écart d'au moins 5 %, de préférence d'au moins 10 %, de manière davantage préférée d'au moins 15 %.

3. Dispositif selon l'une quelconque des revendications précédentes, dans lequel le premier granulé a une première température de fusion T1 et le deuxième granulé a une deuxième température de fusion T2, où T2 est supérieure à T1, de préférence avec un écart d'au moins 40°C.

4. Dispositif selon l'une quelconque des revendications précédentes, dans lequel le premier granulé comprend un premier matériau et dans lequel le deuxième granulé comprend un deuxième matériau, et dans lequel le premier matériau a une première densité n1 et le deuxième matériau a une deuxième densité n2, dans lequel n2 est supérieure à n1.

5. Dispositif selon l'une quelconque des revendications précédentes, dans lequel le premier matériau a un premier coefficient de dilatation u1 et le deuxième matériau a un deuxième coefficient de dilatation u2, dans lequel u2 est inférieur à u1.

6. Dispositif selon l' une quelconque des revendications précédentes, dans lequel la deuxième unité de stockage de granulé comprend un capteur pour mesurer la quantité de granulé dans la deuxième unité de stockage de granulé, lequel capteur est fonctionnellement couplé au système de fourniture.

7. Dispositif selon la revendication précédente, dans lequel une valeur seuil inférieure de la quantité de granulé dans la deuxième unité de stockage de granulé peut être définie, laquelle valeur seuil inférieure déclenche l'utilisation par le système de fourniture d'un minimum de deuxième granulé entre le taux minimal et le taux maximal.

8. Dispositif selon la revendication 3 ou 4, dans lequel une valeur seuil supérieure de la quantité de granulé dans la deuxième unité de stockage de granulé peut être définie, laquelle valeur seuil supérieure déclenche l'utilisation par le système de fourniture d'un maximum de deuxième granulé entre le taux minimal et le taux maximal.

9. Dispositif selon l'une quelconque des revendications précédentes, dans lequel les propriétés de produit comprennent le retrait pendant le refroidissement, et/ou la dureté, et/ou l'adhérence, et/ou la déformation pendant le refroidissement et/ou l'élasticité.

10. Dispositif selon l'une quelconque des revendications précédentes, dans lequel la pompe à vis est couplée en outre à une troisième unité de stockage de granulé via le système de fourniture, dans lequel le système de fourniture est prévu pour commander la fourniture de troisième granulé à partir de la troisième unité de stockage de granulé à la pompe à vis à un taux fixe sur le premier granulé, lequel taux fixe est déterminé par un opérateur sur la base des propriétés de produit.

11. Dispositif selon l'une quelconque des revendications précédentes, dans lequel le moule est choisi parmi un moule d'injection et une filière d'extrusion.

12. Procédé de fabrication d'un produit à partir du plastique, **caractérisé en ce que** le procédé comprend :
- le remplissage d'un moule par une pompe à vis afin de former le produit ;
- la fourniture du premier granulé à partir d'une première unité de stockage de granulé à la pompe à vis via un système de fourniture ;
- la fourniture d'un deuxième granulé à partir d'une deuxième unité de stockage de granulé vers la pompe à vis via le système de fourniture ;
dans lequel le système de fourniture est prévu pour commander la fourniture du premier granulé et du deuxième granulé à un taux prédéterminé qui est défini entre un taux minimal et un taux maximal par un opérateur sur la base des propriétés de produit,
**caractérisé en ce que** le procédé comprend en outre :
- la définition par le système de fourniture d'un taux effectif entre le taux minimal et le taux maximal sur la base d'une quantité de deuxième granulé dans la deuxième unité de stockage de granulé.

13. Procédé selon la revendication précédente, dans lequel le procédé comprend en outre la mesure d'une quantité de granulé dans la deuxième unité de stockage de granulé via un capteur et la délivrance en sortie d'un résultat de la mesure au système de fourniture.
